# EUROPEAN PATENT SPECIFICATION

(11) **EP 3 807 337 B1**
(45) Date of publication and mention of the grant of the patent: **12.06.2024**
(21) Application number: 19725545.8
(22) Date of filing: 08.05.2019
(51) Int. Cl.: C08G 59/26, C08J 5/24, C08G 59/40, C08L 63/00

(54) **TOUGHENED EPOXY COMPOSITIONS**
GEHÄRTETE EPOXIDZUSAMMENSETZUNGEN
COMPOSITIONS ÉPOXY RENFORCÉES

(30) Priority: 15.06.2018 US 201862685303 P
(43) Date of publication of application: 21.04.2021
(73) Proprietor: DOW GLOBAL TECHNOLOGIES LLC, Midland, MI 48674 (US)
(72) Inventor: SCHMITT, Adam K., Midland, MI 48674 (US); AUVIL, Tyler, Auburn Hills, MI 48326 (US); BANK, David H., Midland, MI 48674 (US); BALIJEPALLI, Bharati, Midland, MI 48674 (US)
(74) Representative: Beck Greener LLP
(86) International application number: PCT/US2019/031244
(87) International publication number: WO 2019/240897

(56) References cited:
- EP-A1- 2 956 497
- EP-A2- 2 909 250
- WO-A1-2017/066056
- US-A1- 2016 297 959

## Description

### FIELD

The present invention relates to toughened epoxy compositions for bonding fiber-reinforced composites.

### BACKGROUND

Epoxy-based adhesive compositions are reactive adhesive compositions comprising an epoxy resin, a curing agent and, usually, an accelerator. Upon heat-activation, epoxy groups of the epoxy resin react with the curing agent thereby linking the epoxy resin compounds by a polyaddition reaction to obtain a cured product. Such a cured product is known to have good mechanical properties and a chemical resistance superior to the cured product of other reactive adhesives. These characteristics make epoxy adhesive compositions particularly useful for demanding applications where stringent mechanical requirements must be satisfied, for example, in the automotive industry.

Conventionally, fiber-reinforced composites are composed of a thermosetting resin such as an epoxy resin as a polymer matrix with reinforcing fiber such as a carbon fiber or a glass fiber embedded therein. Fiber-reinforced composites are high strength, high modulus materials for use as structural components in, for example, automotive, aerospace and construction applications. When used in structural applications, the composites are typically formed of continuous fiber filaments or woven cloth embedded in a thermosetting or thermoplastic matrix. Because of their considerable strength and stiffness, and their potential for obtaining significant weight savings, such composites are suitable replacements for metal.

In automotive applications, the epoxy resin compositions are one of the most commonly employed matrix resins. Epoxy matrices, however, can be brittle due to the presence of highly cross-linked networks. The brittle nature of the epoxy composite parts restricts the type of structural parts that can be replaced to lightweight the vehicle. Thus, improving the toughness of epoxy carbon-fiber composites would assist in the replacement of more parts in automobiles. In addition, with a tougher matrix, a lower number of carbon fiber plies can be used in the part to achieve the same strength resulting in lower-cost and lighter parts, thereby furthering the mass reduction effect.

Carbon-fiber epoxy composites for automotive applications also require epoxy resin compositions with high glass transition temperature (Tg) as the parts would be exposed to high temperatures during the assembly process. For curing epoxy resin systems, the Tg increases as the polymerization reactions proceed. It is generally desirable for the resin to develop a Tg in excess of the mold temperature so the part can be demolded without damage. In some cases, the polymer must achieve a Tg high enough for the part to perform properly in its intended use. Therefore, in addition to the curing attributes, the epoxy system must be one which can attain the necessary Tg upon full cure.

Toughenability of high Tg epoxy systems is challenging because of the presence of the highly cross-linked networks. There are many known toughening agents for these epoxy resin compositions such as, for example, pre-formed rubber, and liquid rubber. While these toughening agents generally improve the ductility and impact resistance of neat resins, the toughness does not always transfer to the composites.

Therefore, there exists a need for a toughening agent for high Tg epoxy reinforced fiber composites such as carbon fiber composites which would improve the toughness of the reinforced fiber composite without adversely affecting thermal or rheological properties of the matrix formulation.

US2016/0297959 discloses an epoxy resin composition containing an epoxy resin and a curing agent, in which the bending elastic modulus of a cured product of the epoxy resin composition is 3.3 GPa or higher; and the bending strain at break of the cured product of the epoxy resin composition is 9% or higher; and the fibre reinforced plastic α formed of the cured product of the epoxy resin composition and a reinforcing fibre substrate in which carbon fibres, which are continuous fibres, are evenly aligned in one direction, has 90° bending strength of 95MPa or higher. Also disclosed are a film, a prepreg and a fibrereinforced plastic produced by using the epoxy resin composition.

WO2014/062475 discloses a composition comprising (a) an epoxy resin composition comprising (i) a first epoxy component comprising an epoxy resin having at least one oxazolidone ring structure; and (ii) a second epoxy component selected from the group consisting of a liquid epoxy resin, a divinylarene dioxide, and combinations thereof; (b) a core-shell rubber comprising a rubber particle core and a shell layer; and (c) a hardener.

### SUMMARY

In one illustrative embodiment, a toughened epoxy composition is provided which comprises, based on the total weight of the toughened epoxy composition, (a) 10 wt% to 55 wt% of a first epoxy component comprising one or more epoxy resins having at least one oxazolidone ring structure; and (b) 20 wt % to 80 wt% of a second epoxy component comprising one or more liquid epoxy resins; (c) 1.5 wt% to 15 wt% of one or more latent epoxy curing agents; (d) 1 wt% to 25 wt% of one or more rubber toughening agents and (e) 1 wt% to 29 wt% of one or more phenoxy resin toughening agents.

In one illustrative embodiment, a prepreg is provided which comprises one or more reinforcing fibers impregnated with a toughened epoxy composition, wherein the toughened epoxy composition comprises, based on the total weight of the toughened epoxy composition, (a) 10 wt% to 55 wt% of a first epoxy component comprising one or more epoxy resins having at least one oxazolidone ring structure; and (b) 20 wt% to 80 wt% of a second epoxy comprising one or more liquid epoxy resins; (c) 1.5 wt% to 15 wt% of one or more latent epoxy curing agents; (d) 1 wt% to 25 wt% of one or more rubber toughening agents and (e) 1 wt% to 29 wt% of one or more phenoxy resin toughening agents.

In one illustrative embodiment, a fiber-reinforced composite is provided which comprises a cured prepreg comprising one or more reinforcing fibers and a toughened epoxy composition, wherein the toughened epoxy composition comprises, based on the total weight of the toughened epoxy composition, (a) 10 wt% to 55 wt% of a first epoxy component comprising one or more epoxy resins having at least one oxazolidone ring structure; and (b) 20 wt% to 80 wt% of a second epoxy comprising one or more liquid epoxy resins; (c) 1.5 wt% to 15wt% of one or more latent epoxy curing agents; (d) 1 wt% to 25 wt% of one or more rubber toughening agents and (e) 1 wt% to 29 wt% of one or more phenoxy resin toughening agents.

In one illustrative embodiment, a fiber-reinforced composite is provided which comprises a cured toughened epoxy composition and one or more reinforcing fibers, wherein the toughened epoxy composition comprises, based on the total weight of the toughened epoxy composition, (a) 10 wt% to 55wt% of a first epoxy component comprising one or more epoxy resins having at least one oxazolidone ring structure; and (b) 20 wt% to 80 wt% of a second epoxy comprising one or more liquid epoxy resins; (c) 1.5 wt% to 15 wt% of one or more latent epoxy curing agents; (d) 1 wt% to 25 wt% of one or more rubber toughening agents and (e) 1 wt% to 29 wt% of one or more phenoxy resin toughening agents.

In one illustrative embodiment, a process for making a fiber-reinforced composite is provided which comprises (a) impregnating one or more reinforcing fibers with one or more toughened epoxy compositions comprising, based on the total weight of the toughened epoxy composition, (i) 10 wt% to 55 wt% of a first epoxy component comprising one or more epoxy resins having at least one oxazolidone ring structure; and (ii) 20 wt% to 80 wt% of a second epoxy component comprising one or more liquid epoxy resins; (iii) 1.5 wt% to 15 wt% of one or more latent epoxy curing agents; (iv) 1 wt% to 25 wtt% of one or more rubber toughening agents and (v) 1 wt% to 29 wt% of one or more phenoxy resin toughening agents; and (b) curing the impregnated one or more reinforcing fibers to form a fiber-reinforced composite article.

The toughened epoxy composition of the present invention advantageously forms a fiber-reinforced composite having improved toughness and higher composite tensile modulus by employing a combination of one or more rubber toughening agents and one or more phenoxy resin toughening agents. The improved composite toughness enables the use of these composites in applications where energy absorption and mechanical stiffness are required. In addition, the combination of these two toughening agents also provides a toughened epoxy composition having a low viscosity.

### DETAILED DESCRIPTION

Disclosed is a toughened epoxy composition which comprises, based on the total weight of the toughened epoxy composition, (a) 10 wt% to 55 wt% of a first epoxy component comprising one or more epoxy resins having at least one oxazolidone ring structure; and (b) 20 wt% to 80 wt% of a second epoxy component comprising one or more liquid epoxy resins; (c) 1.5 wt% to 15 wt% of one or more latent epoxy curing agents; (d) 1 wt% to 25 wt% of one or more rubber toughening agents and (e) 1 wt% to 29 wt% of one or more phenoxy resin toughening agents. The term "one or more" as used herein shall be understood to mean that at least one, or more than one, of the recited components may be used.

The toughened epoxy composition in accordance with the present invention includes a first epoxy component comprising an epoxy resin having at least one oxazolidone ring structure. In an embodiment, the oxazolidone ring-containing epoxy resin is a solid epoxy resin. In an embodiment, the solid epoxy resin is not an epoxy novolac resin. The solid epoxy resin generally has an epoxide equivalent weight (EEW) in the range of from 80 grams/equivalent to 1200 grams/equivalent. The epoxy resin will contain at least one oxazolidone ring.

The epoxy resin useful for preparing the oxazolidone ring-containing epoxy resin may comprise an aliphatic epoxy resin, an aromatic epoxy resin, or combination of an aliphatic epoxy resin and an aromatic epoxy resin. Suitable aliphatic epoxy resins used to prepare the oxazolidone ring-containing epoxy resin include, for example, polyglycidyl ethers of aliphatic polyols or alkylene-oxide adducts thereof, polyglycidyl esters of aliphatic long-chain polybasic acids, homopolymers synthesized by vinyl-polymerizing glycidyl acrylate or glycidyl methacrylate, and copolymers synthesized by vinyl-polymerizing glycidyl acrylate or glycidyl methacrylate and other vinyl monomers, and mixtures thereof. Representative examples of the aliphatic epoxy resins used to prepare the oxazolidone ring-containing epoxy resin include glycidyl ethers of polyols such as 1,4-butanediol diglycidyl ether and 1,6-hexanediol diglycidyl ether; a triglycidyl ether of glycerin; a triglycidyl ether of trimethylol propane; a tetraglycidyl ether of sorbitol; a hexaglycidyl ether of dipentaerythritol; a diglycidyl ether of polyethylene glycol or a diglycidyl ether of polypropylene glycol; polyglycidyl ethers of polyether polyols obtained by adding one type, or two or more types, of alkylene oxide to aliphatic polyols such as propylene glycol, trimethylol propane and glycerin; diglycidyl esters of aliphatic long-chain dibasic acids; and mixtures thereof. A combination of aliphatic epoxy resins may be used.

Suitable aromatic epoxy resins used to prepare the oxazolidone ring-containing epoxy resin include, for example, diglycidyl ethers of polyphenols such as hydroquinone; resorcinol; bisphenol A; bisphenol F; 4,4'-dihydroxybiphenyl; novolac; tetrabromobisphenol A; 2,2-bis(4-hydroxyphenyl)-1,1,1,3,3,3-hexafluoropropane; 1,6-dihydroxynaphthalene; and mixtures thereof. A combination of aromatic epoxy resins may be used.

Epoxy-terminated polyoxazolidones are prepared by reacting an epoxy resin with a polyisocyanate compound using a stoichiometric excess of epoxy resin (isocyanate/epoxide ratio lower than 1). The reactions can be carried out in the presence of a catalyst. Methods for preparing oxazolidone ring-containing epoxies can be found, for example, in U.S. Patent Nos. 4,658,007 and 5,112,932.

In one embodiment, an epoxy resin having at least one oxazolidone ring structure is an isocyanate-modified, oxazolidone ring-containing epoxy resin. In general, the polyisocyanate compound used to advance the epoxy resin can have an isocyanate functionality of 2.0 to 6.0, or from 2.0 to 4.0, or from 2.0 to 3.0. Suitable polyisocyanates include, for example, 2,4' diphenylmethane diisocyanate and 4,4' diphenylmethane diisocyanate (MDI) toluene disocyanate (TDI), and xylylene disocyanate (XDI); alphatic diisocyanate (comprising alicyclic diisocyanate) such as hexamethylene diisocyanate (HMDI), isophorone diisocyanate (IPDI), 4,4' methylenebis (cyclohexylisocyanate), trimethyl hexamethylene diisocyanate, dianisidine diisocyanate, toluidine diisocyanate, m-xylyene diisocyanate, 1,5-naphthylene diisocyanate, p-phenylene diisocyanate, 1,4-diethylbenzene-beta, beta' diisocyanate, bexamethylene diisocyanate, dimers, trimers and mixtures of the above. Representative examples of commercially available polyisocyanate include ISONATE^{™} M124, ISONATE^{™} M125, ISONATE^{™} M143, ISONATE^{™} OP50, VORANATE^{™} T-80, and VORANATE^{™} M220 available from The Dow Chemical Company.

Commercially available solid epoxy resins that contain at least one oxazolidone ring that can be used in the toughened epoxy composition in accordance with the present invention include, for example, D.E.R.^{™} 858, D.E.R.^{™} 6508, D.E.R.^{™} 6510 HT, chlorinated or brominated products such as D.E.R.^{™}592 and D.E.R.^{™} 593 available from the Dow Chemical Company.

The first epoxy component comprising one or more epoxy resins having at least one oxazolidone ring structure will constitute at least 10 wt. %, such as at least 20 wt. %, or at least 30 wt. %, of the total weight of the toughened epoxy composition. The first epoxy component comprising one or more epoxy resins having at least one oxazolidone ring structure will constitute up to 55 wt. %, such as up to 45 wt. %, or up to 35 wt. %, of the total weight of the toughened epoxy composition. The first epoxy component comprising one or more epoxy resins having at least one oxazolidone ring structure will constitute 10 wt. % to 55 wt. %, such as from 20 wt. % to 45 wt. % of the total weight of the toughened epoxy composition.

The toughened epoxy composition in accordance with the present invention further includes a second epoxy component comprising one or more liquid epoxy resins. Suitable one or more liquid epoxy resins include, for example, polyglycidyl ethers, polyglycidyl esters, N,N'-diglycidylhydantoins, and poly(N-glycidyl) derivatives of aromatic amines. In one embodiment, the one or more liquid epoxy resins are polyglycidyl ethers of 2,2-bis(4-hydroxyphenyl)propane, of bis(4-hydroxyphenyl)methane, or of a novolak formed from formaldehyde and phenol, or phenol substituted in the ring by one chlorine atom or by one alkyl hydrocarbon group containing from one to nine carbon atoms, and having a 1,2-epoxide content of at least 0.5 equivalent per kilogram, bis(4-diglycidylamino)phenyl)methane, and p-(diglycidylamino)phenyl glycidyl ether.

In one embodiment, suitable one or more liquid epoxy resins include, for example, diglycidyl ethers of polyhydric phenol compounds such as resorcinol, catechol, hydroquinone, biphenol, bisphenol A, bisphenol AP (1, 1-bis(4-hydroxylphenyl)-1-phenyl ethane), bisphenol F, bisphenol K and tetramethylbiphenol; diglycidyl ethers of aliphatic glycols such as the diglycidyl ethers of C₂ to C₂₄ alkylene glycols; polyglycidyl ethers of phenol-formaldehyde novolac resins (epoxy novolac resins), alkyl substituted phenol-formaldehyde resins, phenol-hydroxybenzaldehyde resins, cresol-hydroxybenzaldehyde resins, dicyclopentadiene-phenol resins and dicyclopentadiene-substituted phenol resins; cycloaliphatic epoxy resins, and any combination thereof.

In one embodiment, suitable one or more liquid epoxy resins include, for example, diglycidyl ethers of bisphenol A resins that are commercially available and among others sold by Olin under the designations D.E.R.^{®} 330, D.E.R.^{®} 331, D.E.R.^{®} 332, D.E.R.^{®} 383, D.E.R.^{®} 661, D.E.R.^{®} 662 and D.E.R.^{®} 671 and Huntsman under the tradename Araldite GY 260.

In one embodiment, suitable one or more liquid epoxy resins include, for example, diglycidyl ethers of polyglycols that are commercially available and sold by Olin under the designations D.E.R.^{®} 732 and D.E.R.^{®} 736.

In one embodiment, suitable one or more liquid epoxy resins include, for example, epoxy novolac resins that are commercially available and sold by Olin under the designations D.E.N.^{®} 354, D.E.N.^{®} 431, D.E.N.^{®} 438 and D.E.N.^{®} 439.

In one embodiment, the one or more liquid epoxy resins have an epoxy equivalent weight of from 150 to 600 g/mol or more, or from 150 to 400 g/mol, or from 150 to 250 g/mol. In one embodiment, the one or more liquid epoxy resins contain a diglycidyl ether of a polyhydric phenol, e.g., bisphenol-A or bisphenol-F, having an epoxy equivalent weight of from 150 to 299 g/mol, or from 150 to 250 g/mol.

The second epoxy component comprising one or more liquid epoxy resins will constitute at least 20 wt. %, such as at least 30 wt. %, or at least 40 wt. % of the total weight of the toughened epoxy composition. The second epoxy component comprising one or more liquid epoxy resins will constitute up to 80 wt. %, such as up 70 wt. %, or up to 60 wt. %, of the total weight of the toughened epoxy composition. The second epoxy component comprising one or more liquid epoxy resins will constitute 20 wt. % to 80 wt. %, such as from 30 wt. % to 60 wt. % of the total weight of the toughened epoxy composition.

The toughened epoxy composition in accordance with the present invention further includes one or more latent epoxy curing agents. A curing agent is considered to be "latent" for purposes of this invention if the adhesive, including all the components as set forth herein, exhibits a curing temperature of at least 60°C, or at least 80°C, or at least 100°C or at least 140°C

Any latent epoxy curing agent appropriate for a toughened epoxy composition may be used herein. In one embodiment, suitable latent epoxy curing agents include, for example, one or more of ureas, boron trichloride/amine and boron trifluoride/amine complexes, melamine, diallylmelamine, guanamines such as dicyandiamide, methyl guanidine, dimethyl guanidine, trimethyl guanidine, tetramethyl guanidine, methylisobiguanidine, dimethylisobiguanidine, tetramethylisbiguandidine, heptamethylisobiguanidine, hexamethylisobiguanidine, acetoguanamine and benzoguanamine, amino triazoles such as 3-amino-1,2,4-triazole, hydrazides such as adipic dihydrazide, stearic dihydrazide, and isophthalic dihydrazide, semicarbazide, cyanoacetamide, and aromatic polyamines such as diaminodiphenylsulphones. In one embodiment, the one or more latent epoxy curing agents is dicyandiamide.

In one embodiment, the one or more latent epoxy curing agents are at least one urea compound having one or more urea groups and a molecular weight per urea group of up to 250. In general, the urea compound can be of the structure: 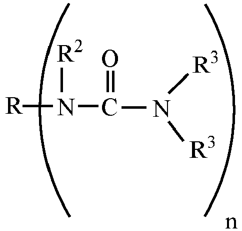 wherein n is 1 or more, R is a substituted or unsubstituted alkyl, cycloalkyl and/or aromatic radical, R² is hydrogen, unsubstituted alkyl, substituted alkyl, phenyl or substituted phenyl, and each R³ is independently an alkyl, substituted alkyl, phenyl or substituted phenyl. R may be the residue, after removal of isocyanate groups, from a mono- or polyisocyanate compound. R may contain, for example, up to 20 carbon atoms, or up to 15 carbon atoms. In one embodiment, R, each R³ and R² (if not hydrogen) are bonded to the adjacent nitrogen atom through an aliphatic carbon atom, n is 1 to 4, or 1, 2 or 3, or 2.

Suitable aromatic ureas include, for example, 3-phenyl- 1, 1-dimethylurea, 3-(p-chlorophenyl)-1, 1-dimethylurea, 3-(3,4-dichlorophenyl)-1, and 1-dimethyl urea. Representative examples of other aromatic ureas include those corresponding to reaction products of an aromatic polyisocyanate with a dialkyl amine, e.g., 2,4'- and/or 4, 4' -methylene bis(phenyl dimethyl urea) and 2,4- and/or 2,6-toluene bis(dimethyl urea). In one embodiment, a suitable urea curing agent includes, for example, phenyl dimethyl urea (PDMU) and toluene bis-dimethyl urea (TBDMU). A commercially available aromatic substituted urea product is Omicure^{™} U-52, a 4,4'-methylene bis(diphenyl dimethyl urea curing agent that is commercially available from Emerald Performance Materials, and OMICURE U410, a toluene bis-dimethyl urea curing agent that is commercially available from CVC Specialty Chemicals.

Representative examples of aliphatic ureas include tetraalkyl urea compounds in which the alkyl groups each independently have 1 to 12, or 1 to 2 carbon atoms, such as tetramethylurea and tetraethylurea. In one embodiment, an aliphatic urea corresponds to a reaction product of an aliphatic (including cycloaliphatic) isocyanate with a dialkyl amine, e.g., isophorone bis(dimethyl urea), cyclohexane bis (dimethyl urea), hexane-1,6-bis(dimethyl urea), and 4, 4' -methylene bis(cyclohexane dimethyl urea). A commercially available cycloaliphatic substituted urea product is Omicure^{™} U-35, available from Emerald Performance Materials.

The urea compound is believed to also function as a curing accelerator, i.e., a catalyst. Accordingly, it is not necessary to include a separate curing accelerator or catalyst in the composition of the invention. However, if an additional curing accelerator is desired, it can be any of those discussed above or as known in the art.

In one embodiment, the one or more latent epoxy curing agents is at least one urea compound discussed above, and one or more additional latent epoxy curing agents. For example, the one or more additional latent epoxy curing agents can be any of those discussed above.

In general, the one or more latent epoxy curing agents are used in an amount sufficient to cure the toughened epoxy composition. Typically, a sufficient amount of the curing agent is provided to consume at least 80% of the epoxide groups present in the composition. A large excess over that amount needed to consume all of the epoxide groups is generally not needed. Accordingly, the one or more latent epoxy curing agents constitutes at least 1.5 wt. %, such as at least 1.75 wt. %, or at least 2.0 wt. % of the total weight of the toughened epoxy composition. The one or more latent epoxy curing agents constitute up to 15 wt. %, such as up to 10 wt. %, or up to 8 wt. % of the total weight of the toughened epoxy composition.

The toughened epoxy composition in accordance with the present invention further includes one or more rubber toughening agents and one or more phenoxy resin toughening agents. In one embodiment, a suitable rubber toughening agent includes, for example, a liquid rubber, such as one having two or more epoxide-reactive groups, e.g., amino or carboxyl groups. If desired, at least a portion of the liquid rubber has a T_{g} of -40°C or lower, or -50°C or lower, as measured by differential scanning calorimetry. Such a liquid rubber toughening agent may be entirely or partially reacted with an epoxy resin to form a rubber-modified epoxy resin that has epoxy groups.

In addition, such a liquid rubber can be a homopolymer or copolymer of a conjugated diene, especially a diene/nitrile copolymer. For example, the conjugated diene rubber can be butadiene or isoprene. In one embodiment, the conjugated diene rubber is butadiene and the nitrile monomer is acrylonitrile thus forming butadiene-acrylonitrile copolymers. The rubbers can contain, in the aggregate, no more than 30 weight percent polymerized unsaturated nitrile monomer, or no more than about 26 weight percent polymerized nitrile monomer. The liquid rubber may contain from 1.5, or from 1.8, or up to 2.5, or up to 2.2, of epoxide-reactive terminal groups per molecule, on average. In one embodiment, the rubber toughening agent is a carboxyl-terminated rubber. The molecular weight (Mₙ) of the rubber is suitably from 2000 to 6000, or from 3000 to 5000. Suitable carboxyl-functional butadiene and butadiene/acrylonitrile rubbers are commercially available from Noveon under the tradenames Hycar^{®} 2000X162 carboxyl-terminated butadiene homopolymer, Hycar^{®} 1300X31, Hycar^{®} 1300X8, Hycar^{®} 1300X13, Hycar^{®} 1300X9 and Hycar^{®} 1300X18 carboxyl-terminated butadiene/acrylonitrile copolymers. A suitable amine-terminated butadiene/acrylonitrile copolymer is sold under the tradename Hycar^{®} 1300X21.

Other suitable rubbery materials include amine-terminated polyethers, fatty acids (which may be dimerized or oligomerized), and elastomeric polyester.

In one embodiment, the rubber toughening agent includes, for example, a core-shell rubber. Representative examples of liquid rubber and core-shell rubber components are disclosed in U.S. Patent Nos. 7,642,316 and 7,625,977. Generally, a core-shell rubber is a particulate material having a rubbery core. In one embodiment, the rubbery core can have a T_{g} of less than -20°C, or less than -50°C or less than -70°C. In one embodiment, the T_{g} of the rubbery core may be below -100°C. The core-shell rubber also has at least one shell portion that has a T_{g} of at least 50°C. The core of the core-shell rubber may be a polymer or copolymer of a conjugated diene such as butadiene, or a lower alkyl acrylate such as η-butyl-, ethyl-, isobutyl- or 2-ethylhexylacrylate, or may be a silicone rubber. The shell polymer, which is optionally chemically grafted or crosslinked to the rubber core, can be polymerized from at least one lower alkyl methacrylate such as methyl-, ethyl- or t-butyl methacrylate. Homopolymers of such methacrylate monomers can be used. Further, up to 40% by weight of the shell polymer can be formed from other monovinylidene monomers such as styrene, vinyl acetate, vinyl chloride, methyl acrylate, ethyl acrylate, butyl acrylate, and the like. The molecular weight of the grafted shell polymer is generally between 20,000 and 500,000. Examples of useful core-shell rubbers include those described in EP 1 632 533 Al and those sold by Kaneka Corporation under the designation Kaneka Kane Ace, including, for example, Kaneka Kane Ace MX 154, Kaneka Kane Ace MX 156 and Kaneka Kane Ace MX 120 core-shell rubber dispersions.

In another embodiment, an epoxy resin may be added to the rubber toughening agent to increase the adhesion, flow properties, or both, of the material. In one embodiment, a suitable epoxy resin includes, for example, a phenolic resin, which may be a novolac type or other type resin. In one embodiment, a suitable epoxy resin includes, for example, a bisphenol-A epichlorohydrin ether polymer, or a bisphenol-A epoxy resin which may be modified with butadiene or another polymeric additive or bisphenol-F-type epoxy resins. Moreover, various mixtures of several different epoxy resins may be employed as well. Examples of suitable epoxy resins are sold under the tradename Araldite GY 282, GY 281 and GY 285 supplied by Huntsman.

The one or more rubber toughening agents constitute at least 1 wt. %, such as at least 2.5 wt. %, or at least 5 wt. % of the total weight of the toughened epoxy composition. The one or more rubber toughening agents constitute up to 15 wt. %, such as up to 10 wt. % of the total weight of the toughened epoxy composition.

The toughened epoxy composition in accordance with the present invention further includes one or more phenoxy resin toughening agents. In general, the one or more phenoxy resin toughening agents can be polyhydroxyethers, with ether linkages along the polymer backbone and pendant hydroxyl groups. In one embodiment, suitable one or more phenoxy resins can be represented by the structure of formula I: 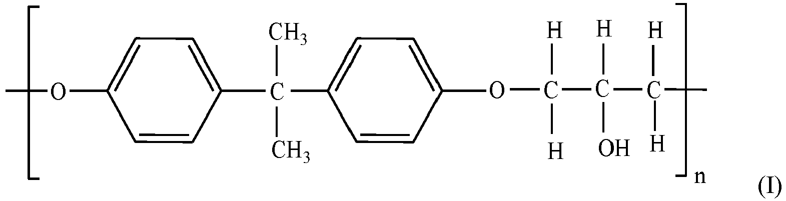 wherein n is from 30 to 100. In one embodiment, n is from 50 to 90.

In one embodiment, a suitable phenoxy resin can be, for example, a reaction product of a phenol based difunctional epoxy resin and a difunctional phenol (e.g., the reaction product of bisphenol A epoxy with bisphenol A). In one embodiment, a suitable phenoxy resin can be, for example, a phenoxy resin synthesized directly from a bisphenol (e.g., bisphenol A) and epichlorohydrin. Modified phenoxy resins may also be used. For example, modified phenoxy resins include, for example, products marketed by Gabriel Performance Product such as the PKHB, PKHC, PKHH, PKHJ, PKHP pellets and powder.

In one embodiment, the phenoxy resins can have a weight-average molecular weight of at least 5,000, or from at least 25,000, or from at least 50,000. In one embodiment, the phenoxy resins can have a weight-average molecular weight of less than 100,000, or less than 75,000, or less than about 60,000.

The one or more phenoxy resin toughening agents constitute at least 1 wt. %, such as at least 2 wt. %, or at least 5 wt. % of the total weight of the toughened epoxy composition. The one or more phenoxy resin toughening agents constitute up to 29 wt. %, such as up to 25 wt. or up to 20 wt. %, of the total weight of the toughened epoxy composition. In one embodiment, the one or more phenoxy resin toughening agents can constitute from 1 wt. % to 10 wt. % of the total weight of the toughened epoxy composition.

The toughened epoxy composition according to the present invention can further contain other additives such as fillers, diluents, plasticizers, extenders, pigments and dyes, fire-retarding agents, thixotropic agents, expanding agents, flow control agents, adhesion promoters and antioxidants. In general, the one or more additives can constitute from 0 wt. % to 20 wt. % of the total weight of the toughened epoxy composition.

Suitable fillers include, for example, glass flakes, aramid particles, carbon black, carbon nanotubes, various clays such as montmorillonite, and other mineral fillers such as wollastonite, talc, mica, titanium dioxide, barium sulfate, calcium carbonate, calcium silicate, flint powder, carborundum, molybdenum silicate, sand, and the like. Some fillers are somewhat electroconductive, and their presence in the composite can increase the electroconductivity of the composite. In some applications, notably automotive applications, it is preferred that the composite is sufficiently electroconductive that coatings can be applied to the composite using so-called "e-coat" methods, in which an electrical charge is applied to the composite and the coating becomes electrostatically attracted to the composite. Conductive fillers of this type include metal particles (such as aluminum and copper), carbon black, carbon nanotubes, graphite and the like.

In general, the one or more fillers can be present in the toughened epoxy composition in an amount of from 0 to 20 wt. %, based on the total weight of the toughened epoxy composition. In one embodiment, the one or more fillers can be present in the toughened epoxy composition in an amount of from 1 to 10 wt. %, based on the total weight of the toughened epoxy composition.

Suitable one or more diluents include, for example, methyl ethyl ketone (MEK), dimethylformamide (DMF), ethyl alcohol (EtOH), propylene glycol methyl ether (PM), propylene glycol methyl ether acetate (DOWANOL^{™} PMA), dibutyl phthalate, dioctyl phthalate, styrene, low molecular weight polystyrene, styrene oxide, allyl glycidyl ether, phenyl glycidyl ether, butyl glycidyl ether, vinylcyclohexene oxide, neopentylglycol diglycidyl ether, butanediol diglycidyl ether, hexanediol diglycidyl ether, diethylene glycol diglycidyl ether, dipropylene glycol diglycidyl ether, polypropylene glycol) diglycidyl ether, thiodiglycol diglycidyl ether, maleic anhydride, epsilon-caprolactam, butyrolactone, acrylonitrile, and any combination thereof.

In general, the one or more diluents can be present in the toughened epoxy composition in an amount of 0 to 10 weight percent, based on the total weight of the toughened epoxy composition.

In general, a toughened epoxy composition according to the present invention can be prepared by adding the components together in a single stage, or successively and kneaded in several stages. In the case of successive addition, the components may be added in any order. From the point of view of the storage stability of the resulting composition (E) and prepregs, it is preferable to add the curing agent last.

In one embodiment, a toughened epoxy composition according to the present invention can have a viscosity ranging from 10 to 100 Pa•s at 100°C and determined by rheological measurement.

In one embodiment, a toughened epoxy composition according to the present invention is useful for making a prepreg. In general, a prepreg can be obtained by impregnating one or more reinforcing fibers as described below with the toughened epoxy composition. The methods for producing the prepregs are not particularly limited, and any of the conventionally known methods may be used. In one embodiment, a prepreg can be obtained by a hot melt method in which the toughened epoxy composition is applied onto a release sheet to form a thin film, which is then released, and the resultant resin film is allowed to impregnate the reinforcing fiber in the form of a sheet. In one embodiment, a prepreg can be obtained by a solvent method in which the toughened epoxy composition is made into a varnish with a solvent and the reinforcing fiber is impregnated with the varnish. As one skilled in the art will understand, a range of the content of the reinforcing fiber in the resulting prepreg varies depending on the type and form of the reinforcing fiber, and the chemical composition of the toughened epoxy composition. In one embodiment, the reinforcing fiber can be present in an amount of from 20 to 80 vol. %.

The toughened epoxy composition according to the present invention is useful for making fiber-reinforced composites. In one embodiment, a fiber-reinforced composite is obtained by curing the prepreg discussed above, i.e., the composites are made by impregnating the toughened epoxy composition with the one or more reinforcing fibers and then curing the toughened epoxy composition and the reinforcing fibers.

The reinforcing fibers are thermally stable and have a high melting temperature, such that the reinforcing fibers do not degrade or melt during the curing process. Suitable fiber materials include, for example, glass, quartz, polyamide resins, boron, carbon, wheat straw, hemp, sisal, cotton, bamboo and gel-spun polyethylene fibers.

The reinforcing fibers can be provided in the form of short (0.5 to 15 cm) fibers, long (greater than 15 cm) fibers or continuous rovings. The fibers can be provided in the form of a mat or other preform if desired; such mats or preforms may in some embodiments be formed by entangling, weaving and/or stitching the fibers, or by binding the fibers together using an adhesive binder. Preforms may approximate the size and shape of the finished composite article (or portion thereof that requires reinforcement). Mats of continuous or shorter fibers can be stacked and pressed together, typically with the aid of a tackifier, to form preforms of various thicknesses, if required.

Suitable tackifiers for preparing preforms (from either continuous or shorter fibers) include heat-softenable polymers such as described, for example, in U.S. Pat. Nos. 4,992,228, 5,080,851 and 5,698,318. The tackifier should be compatible with and/or react with the polymer phase of the composite, so that there is good adhesion between the polymer and reinforcing fibers. A heat-softenable epoxy resin or mixture thereof with a hardener, as described in U.S. Pat. No. 5,698,318, is especially suitable. The tackifier may contain other components, such as one or more catalysts, a thermoplastic polymer, a rubber, or other modifiers.

A sizing or other useful coating may be applied onto the surface of the fibers before they are introduced into the mold. A sizing often promotes adhesion between the cured toughened epoxy composition and the fiber surfaces.

The composite may be formed in a mold. In such a case, the reinforcing fibers may be introduced into the mold before the toughened epoxy composition. This is normally the case when a fiber preform is used. The fiber preform is placed into the mold, the mold is closed, and the toughened epoxy composition is then introduced into the mold, where it penetrates between the fibers in the preform, fills the cavity, and then cures to form a composite product. The epoxy viscosity can affect the infusion rate and is critical to the final properties of composites.

Alternatively, the fibers (including a preform) can be deposited into an open mold, and the reaction mixture can be sprayed, poured or injected onto the preform and into the mold. After the mold is filled in this manner, the mold is closed and the reaction mixture cured. An example of a process of this type is gap compression resin transfer molding, in which the mold containing the fibers is kept open with a gap which may be, for example, 10 to 100% or more of the original cavity thickness. The gap permits lower flow resistance, which makes mold filling easier and facilitates penetration of the reaction mixture around and between the fibers.

Short fibers can be introduced into the mold with the toughened epoxy composition. Such short fibers may be, for example, blended with the toughened epoxy composition (or both) prior to forming the reaction mixture. Alternatively, the short fibers may be added into the reaction mixture at the same time as the toughened epoxy composition, or afterward but prior to introducing the hot reaction mixture into the mold.

Alternatively, short fibers can be sprayed into a mold. In such cases, the reaction mixture can also be sprayed into the mold, at the same time or after the short fibers are sprayed in. When the fibers and reaction mixture are sprayed simultaneously, they can be mixed together prior to spraying. Alternatively, the fibers and reaction mixture can be sprayed into the mold separately but simultaneously. The sprayed materials may be spread and/or leveled using a doctor blade or similar device before closing the mold and performing the cure. In a process of particular interest, long fibers are chopped into short lengths and the chopped fibers are sprayed into the mold, at the same time as or immediately before the hot reaction mixture is sprayed in. Mesh materials often function as flow promoters.

A sizing or other useful coating may be applied onto the surface of the fibers before they are introduced into the mold. A sizing often promotes adhesion between the cured toughened epoxy composition and the fiber surfaces.

In one embodiment, a wet compression process can be used, in which the reaction mixture is applied directly to a fiber preform or stack without injection by spraying (as in the PUpreg or Baypreg processes), or by laying it down as "bands" of system, which are being fed through a wider slit die, which could have a width of 1 cm to 50 cm or more. Sufficient material is applied to reach the desired fiber volume content in the final product. The reaction mixture can be applied to the fibers inside an open mold, or outside the mold. The reaction mixture may instead be applied to the center layer of a build-up, by wetting a layer of fibers with the reaction mixture and then putting a second layer of fibers onto the wetted surface, therefore sandwiching the resin layer in between two layers of fibers. The fiber mats can be made out of non-crimped fiber buildups, of woven fabric, of random fiber build-ups or preforms. If the reaction mixture is applied to the fibers outside of the mold, it is typically applied at a somewhat low temperature, to prevent premature curing, and to reduce the viscosity of the reaction mixture so it does not drip off the fibers before they are transferred into the mold. The wetted preform is then placed into the lower half of a hot mold, the mold is closed and the material cured under compression.

Composites made in accordance with the invention may have fiber contents of at least 20 volume percent, or at least 25 volume percent or at least 35 volume percent, and up to 80 volume percent, or up to 70 volume percent, or up to 60 volume percent.

The mold may contain, in addition to the reinforcing fibers, one or more inserts. Such inserts may function as reinforcements, may function as flow promoters, and in some cases may be present for weight reduction purposes. Examples of such inserts include, for example, wood, plywood, metals, various polymeric materials, which may be foamed or unfoamed, such as polyethylene, polypropylene, another polyolefin, a polyurethane, polystyrene, a polyamide, a polyimide, a polyester, polyvinylchloride and the like, various types of composite materials, and the like, that do not become distorted or degraded at the temperatures encountered during the molding step.

The reinforcing fibers and core material, if any, may be enclosed in a bag or film such as is commonly used in vacuum assisted processes.

The mold and the preform (and any other inserts, if any) may be heated to the curing temperature or some other useful elevated temperature prior to contacting them with the reaction mixture. The mold surface may be treated with an external mold release agent, which may be solvent or water-based.

The particular equipment that is used to mix the components of the reaction mixture and transfer the mixture to the mold is not considered to be critical to the invention, provided the reaction mixture can be transferred to the mold before it attains a high viscosity or develops significant amounts of gels. The process of the invention is amenable to Resin Transfer Molding (RTM), vacuum-assisted resin transfer molding (VARTM), Resin Film Infusion (RFI), gap compression resin transfer molding and Seeman Composites Resin Infusion Molding Process (SCRIMP) processing methods and equipment (in some cases with equipment modification to provide the requisite heating at the various stages of the process), as well as to other methods such as wet compression.

The mixing apparatus can be of any type that can produce a highly homogeneous mixture of the epoxy resin and hardener (and any optional components that are also mixed in at this time). Mechanical mixers and stirrers of various types may be used. Two preferred types of mixers are static mixers and impingement mixers.

In some embodiments, the mixing and dispensing apparatus is an impingement mixer. Mixers of this type are commonly used in so-called reaction injection molding processes to form polyurethane and polyurea moldings. The toughened epoxy composition (and other components which are mixed in at this time) are pumped under pressure into a mixing head where they are rapidly mixed together. Operating pressures in high pressure machines may range from 1,000 to 29,000 psi or higher (6.9 to 200 MPa or higher), although some low pressure machines can operate at significantly lower pressures. The resulting mixture can then be passed through a static mixing device to provide further additional mixing, and then transferred into the mold cavity. The static mixing device may be designed into the mold. This has the advantage of allowing the static mixing device to be opened easily for cleaning.

In one embodiment, the toughened epoxy composition is mixed as described above, by pumping them under pressure into a mixing head. Impingement mixing may be used. The catalyst may be introduced with the toughened epoxy composition, or as a separate stream. The operating pressure of the incoming toughened epoxy composition streams may range from a somewhat low value (for example, from about 1 to about 6.9 MPa) or a high value (such as, for example, from 6.9 to 200 MPa). The resulting mixture of toughened epoxy composition and catalyst is then introduced into the mold at a somewhat low operating pressure, such as up to 5 MPa or up to about 1.035 MPa). In such embodiments, the mixture of toughened epoxy composition and catalyst is typically passed through a static mixer before entering the mold. Some or all of the pressure drop between the mixhead and the mold injection port often will take place through such a static mixer. An especially preferred apparatus for conducting the process is a reaction injection molding machine, such as is commonly used to processes large polyurethane and polyurea moldings. Such machines are available commercially from Krauss Maffei Corporation and Cannon or Hennecke.

In other embodiments, the reaction mixture is mixed as before, and then sprayed into the mold. Temperatures are maintained in the spray zone such that the temperature of the hot reaction mixture is maintained as described before.

The mold is typically a metal mold, but it may be ceramic or a polymer composite provided the mold is capable of withstanding the pressure and temperature conditions of the molding process. The mold contains one or more inlets, in liquid communication with the mixer(s), through which the reaction mixture is introduced. The mold may contain vents to allow gases to escape as the reaction mixture is injected.

The mold is typically held in a press or other apparatus which allows it to be opened and closed, and which can apply pressure on the mold to keep it closed during the filling and curing operations. The mold or press is provided with means by which heat or cooling can be provided.

In some embodiments of the foregoing process, the molded composite is demolded in no more than 5 minutes, or from 2 to 5 minutes, or from 2 to 4 minutes, after the toughened epoxy composition has been introduced into the mold. In such processes, the introduced reaction mixture flows around and between the reinforcing fibers and fills the mold and then cures in the mold, preferably forming a polymer having a glass transition temperature of at least 150°C (or at least 155°C) within 5 minutes, or within 4 minutes, after the reaction mixture has been introduced into the mold.

The process of the invention is useful to make a wide variety of composite products, including various types of automotive parts. Examples of these automotive parts include vertical and horizontal body panels, automobile and truck chassis components, and so-called "body-in-white" structural components.

Body panel applications include fenders, door skins, hoods, roof skins, decklids, tailgates and the like. Body panels often require a so-called "class A" automotive surface which has a high distinctness of image (DOI). For this reason, the filler in many body panel applications will include a material such as mica or wollastonite.

The following examples are provided to illustrate the disclosed compositions, but are not intended to limit the scope thereof. All parts and percentages are by weight unless otherwise indicated.

The following designations, symbols, terms and abbreviations set forth in Table 1 below are used in the Examples:

**TABLE 1**

| Trade Name | Company | Description |
|---|---|---|
| D.E.N. ^{®} 438 | Olin | Epoxy novolac resin having an epoxy equivalent weight of 176 to 181 g/eq |
| D.E.R.^{®} 6508 | Olin | Oxazolidone-based solid epoxy resin |
| D.E.R.^{®} 330 | Olin | A liquid diglycidyl ether of bisphenol A, having an epoxy equivalent weight of approximately 180. |
| D.E.R.^{®} 331 | Olin | A liquid diglycidyl ether of bisphenol A, having an epoxy equivalent weight of approximately 187. |
| Licolub WE-4 | Clariant | Waxy mold release agent |
| Dyhard 100SF | AlzChem | Dicyandiamide |
| Omicure U410 | CVC Thermoset Specialties | Toluene bis-dimethyl urea (TBDMU) |
| Kane Ace MX 154 | Kaneka | 40% core-shell rubber in LER |
| PKHP-200 Phenoxy resin | Gabriel | Phenoxy thermoplastic resin |

Prior to preparing the epoxy formulation, the PKHP-200 phenoxy resin was blended with the liquid epoxy resin (as 20% solution) as described below.

### Preparation of Phenoxy resin blend

A one liter 4-neck round bottom flask equipped with a mechanical stirrer and thermocouple was charged with D.E.R.^{®} 330 (320 g) and placed under an atmosphere of nitrogen. The D.E.R.^{®} 330 was warmed to 120°C and the PKHP-200 phenoxy resin (80 g powder) was slowly added while stirring rapidly over approximately 10 minutes. The mixture was then allowed to stir at 120°C for approximately one hour, or until the mixture was completely homogeneous. The solution was then immediately poured into a dry glass jar and cooled under an atmosphere of nitrogen gas.

### Epoxy formulation preparation

The epoxy resin composition was prepared by first preparing composition A and composition B separately and mixing before use. The composition A consisted of D.E.N. ^{®} 438, D.E.R.^{®} 6508, and Licolub WE-4. The composition B consisted of D.E.R.^{®} 331, Dyhard 100SF, and Omicure U410, Kane Ace MX 154, and the phenoxy resin blend. The components of composition A were weighed into a Flacktek speed mixer cup and placed in the oven at 120°C for at least 1 hour in order to melt the solid epoxy resin. The composition A was then mixed by hand with a tongue depressor to incorporate the epoxy resins and internal mold release. The composition A was then placed back into the oven and mixed again after 1 hour. The composition A was kept in the oven overnight to promote thermal degassing of the resin which resulted in lower clear cast void content.

The components of composition B were weighed into another speed mixer cup with 20% excess (1.2 eq) and mixed using a dual-axis speed mixer (FlackTek Inc., Landrum, SC, Model DAC 150 FLZ-K) at 2000 rpm until visually homogeneous (typically 1-2 minutes) ensuring that the mixture does not exceed ~50°C.

The toughened epoxy composition was prepared by combining composition A with composition B. The necessary amount of each component in composition B (listed in Table 3) was weighed into the hot composition A and the entire formulation was mixed in a dual-axis speed mixer at 850 rpm for 30 sec followed by 1650 rpm for 30 sec. The mixed composition was poured onto a baking sheet lined with Teflon release paper to cool. The resulting solid toughened epoxy composition was stored in a freezer until use for epoxy clear casts or composite preparation.

### Epoxy clear cast preparation

Epoxy clear cast plaques were prepared by compression molding using a Wabash MPI platen press (G302H-18-CLX). A 6" x 6" x 1/8" (15.24 x 15.24 x 0.3175 cm) mold was used to prepare the plaques and the epoxy resin formulation was charged with a 5% mass excess (based on the density). The plate and mold assembly consisted of (from bottom to top) a steel plate, a foil sheet for surface finish, a Teflon-coated release liner, the mold and epoxy charge, Teflon-coated release liner, a foil sheet for surface finish, and a steel plate. The platen press was pre-heated to 100°C and the molding assembly was placed in the press, and allowed to preheat for 30 sec prior to starting the molding cycle. The molding cycle consisted of a 10 minute soak at 100°C, 10 minute temperature ramp from 100°C to 150°C, 10 minute hold at 150°C, and a 12 minute cool from 150 °C to 37°C. The entire molding procedure was carried out under 25 tons (25400 kg) of applied pressure. The soak at 100°C allows enough time for the epoxy resin formulation to flow and fill the mold prior to the onset of the curing reaction. This soak time aids in the preparation of void-free clear cast plaques for testing. After the molding cycle, the cured epoxy plaque was removed from the molding assembly.

The epoxy clear cast plaques were used to determine the Peak Storage Modulus, Tensile Stress, Tensile Strain, Young's Modulus, and Tensile Toughness for the neat epoxy formulations (Table 3).

### Composite preparation

Composites were prepared using 2 different methods based on the desired part thickness. Composites with dimensions of 5" x 5" x 2 mm (12.7 cm x 12.7 cm x 2 mm) thickness were prepared using a vacuum bag and compression molding to infuse and cure the composites in a single step. First, a pre-infused carbon fiber (CF) fabric with epoxy film was prepared. A given number of 5" (12.7 cm) squares of CF fabric were cut depending on the areal weight and the intended part thickness (6 plies for CF UD). Using a 6" (15.24 cm) Carver Press (Model 4386 equipped with temperature controlled platens, air and water cooling), a thin epoxy film was molded using a 5" x 5" x 0.25 mm (12.7 cm x 12.7 cm x 0.25 mm) mold. The molding assembly consisted of a bottom steel plate, release liner, mold and epoxy charge, release liner, and top steel plate. The epoxy charge was held constant at 4.5 g. The temperature and pressure profile for this pre-infusion step are set forth in Table 2.

**TABLE 2**

| Step | Temperature | Time | Pressure | Purpose |
|---|---|---|---|---|
| 1 | 70°C | 30 sec | 2000 lbs | Mold |
| 2 | 70°C | 30 sec | 4000 lbs | Mold |
| 3 | 70 → 57°C | 3-4 min | 4000 lbs | Cool |

The molded epoxy film was removed from the press and the top release liner and mold were removed leaving the epoxy film on the bottom release liner. The pre-cut 5" (12.7 cm) CF fabric square was placed on top of the epoxy film and placed on the bottom heated platen (70°C) for 30 seconds to promote adhesion between the epoxy and CF fabric with no pressure being applied. The pre-infused CF fabric was removed from the press and allowed to cool. This process was repeated until each ply was prepared in a similar manner.

Infusion of the composite plies was carried out using a vacuum bagging method. Vacuum bag supplies were purchased from Fiber Glast Developments Corporation (Brookville, OH) and included a Thru-Bag Vacuum Connector (910-A), Stretchion^{®} 800 Bagging Film (1688), Breather and Bleeder 7 oz. (199 ml)(1779), and Yellow Sealant Tape (580). A stainless-steel mold was machined for 5" (12.7 cm) square composite preparation. The machined parts includincludeded: a square frame with 5" (12.7 cm) square inner dimensions and ~6" x 6" x 1/4" (15.24 x 15.24 x 0.635 cm) outer dimensions, square insert with 4 7/8" x 4 7/8" x 3/16" (12.38 x 12.38 x 0.476 cm) outer dimensions, and two 6" x 6" x 1/16" (15.24 x 15.24 x 0.1588 cm) plates. The parts were fabricated from low-carbon steel blanks purchased from McMaster-Carr (Aurora, OH) (part no. 1388K111, 1388K67, 1388K15) and were polished prior to use. Additionally, ultra-slippery PTFE tape was purchased from McMaster-Carr (6305A48) for adhering release liners to the custom parts and covering the steel molds to prevent epoxy adhesion during infusion and cure. The 6" (15.24 cm) Carver press (described above) and Welch Gen 1.0 vacuum pump (Model 8890A-55) were used for the infusion and cure process.

First, the square outer frame was placed on the bottom plate. The pre-infused CF fabric lay-up (6-ply UD pre-infused fabric) was placed in the center of the frame and the square inner plate was placed on top. Thin breather film strips (~1" x 7" (2.54 x 17.78 cm)) were placed around each edge of the mold to maintain a continuous air path during infusion. The top plate was placed on top and the assembly was secured using 4 pieces of tape from bottom to top on each edge. The mold assembly was placed on sheet of Stretchlon 800 film (15" x 11" (38.10 x 27.94 cm)) and another piece of breather film (~4" x 7" (10.16 x 17.78 cm)) was placed next to one side of the mold assembly with the bottom piece of the Thru-Bag Vacuum Connector. A line of adhesive tape was placed around the breather film and mold assembly to seal the vacuum bag ensuring that the adhesive is overlapped in each corner to prevent leaks. Another piece of Stretchlon 800 film was placed on top and the vacuum bag was sealed by pressing along the entire adhesive length and removing any existing air gaps.

A small slit was made in the top layer of bagging film for the vacuum connector and the vacuum hose was connected between the vacuum pump and bag. A valve on the vacuum pump was slowly opened to evacuate the vacuum bag and it was audibly checked for leaks around the adhesive boundary. The excess bagging film was removed by cutting around the edges. The vacuum bag assembly was placed in the hot press which was preheated to the infusion temperature (95°C). The plates were brought into contact with the molding assembly until the needle just moved on the applied pressure gauge. The temperature and pressure were held constant for the entire infusion step. After 10 minutes for infusion, the mold temperature was increased to 155°C and the ramp time was ~5 min. When the press reached the cure temperature, additional pressure (10,000 lbs (4540 kg)) was applied to help consolidate the composite. After 25 min hold at 155°C, the cooling water was started to cool the temperature of the platens and mold to ~ 37°C prior to removing from the press. The vacuum bag was removed from the press and deconstructed to remove the molded composite part.

Composites with dimensions of 12" x 12" x 4 mm (30.48 cm x 30.48 cm x 4 mm) thickness were prepared using a heated blade coater to produce a continuous film of epoxy resin on release liner. The blade height was adjusted to 0.008" (0.02 cm) control the thickness of the epoxy film. The prepreg plies were prepared by layering an epoxy film on release liner on bottom, a unidirectional carbon fiber fabric in the middle, and a second epoxy film on release liner on top. The prepreg was infused by passing through a heated nip roller at 95°C with a gap set to 0.025" (0.0635 cm). The infused prepreg was then cut into 12" by 12" (30.48 x 30.48 cm) square plies. The composite layup consisted of 6 aligned unidirectional plies, a 12" (30.48 cm) x 6 cm x 12 micrometer thick Teflon film along one edge of the composite, and 6 additional aligned unidirectional plies on top. The Teflon spacer is placed at the midplane to serve as a delamination initiator for the interlaminar fracture toughness testing. The composites were molded using a PMG press with the following conditions: mold temperature of 150°C, closing speed of 0.2 inches/second (0.508 cm/s), hold time of 15 seconds, force during hold of 28 tons (28449 kg), force during molding of 180 tons (182880 kg), and total cycle time of 3 minutes. The composite was removed from the mold and cut into the specimens necessary for each test.

### Test methods

### Epoxy formulation viscosity

The viscosity testing of the uncured epoxy composition was performed using a TA Instruments ARES-G2 Rheometer with 25 mm aluminum disposable plate with drip edge on the lower fixture and 8 mm aluminum disposable plate on the upper fixture. The instrument was set-up for an oscillation temperature ramp test from 50°C to 150°C/min, 1 rad/s (57 degrees/s) frequency, 5% strain, sampling rate of 1 Hz, and the environmental chamber was set to oven gas. The accessory thermocouples were used on both the upper and lower sides of the geometry so that the sample temperature was taken from contact points on the reverse sides of the upper plate and the lower plate. After installing the thermocouples and geometry, the gap was zeroed at room temp, and the axial force and torque were balanced. The environmental test chamber temperature (ETC) was set to 50°C and the geometry was allowed to equilibrate.

The epoxy compositions were stored in a freezer at -20°C before taking a solid piece off for testing, and then placed on the lower plate geometry centered under the contact point. The sample was allowed to warm up to 50°C and the upper plate was lowered until contact was made with the surface of the material resulting in a 2-4 mm gap. Once the temperature was stable at 50°C, the temperature ramp was started and the viscosity data was recorded. Although the experiment final temperature was set to 150°C, the test was always stopped early to prevent overloading the transducer as the epoxy cures above 120°C. Once the drastic viscosity increase is observed and G' and G" exceeded 104 Pa•s, the test was stopped to avoid damage to the transducer. Finally, the upper fixture was unscrewed from the instrument, and the fixture body with thermocouple attached was moved all the way up to allow the fixture to be removed freely. The disposable plates were then replaced for the next test. The viscosity reported in Table 3 is the viscosity value from this test when the experiment temperature reached 100°C.

### Epoxy clear cast and composite tensile testing

Tensile properties, including Tensile Stress, Tensile Strain, and Young's Modulus, were determined using ASTM D3039 Tensile Properties of Polymer Matrix Composite Materials. Specimens were cut from molded plaques with typical dimensions of 0.5" x 5" (1.27 x 12.7 cm). In addition, longitudinal tensile composite specimens were tabbed prior to testing due to the higher strength of the reinforced materials. Specimens were tested at room temperature (23°C) using a servo-hydraulic test frame [MTS Model 880] with a 444 kN load cell and a pair of hydraulic grips.

The specimens were gripped at the two ends with grips covering a length of 25 mm at each end, and the pressure of the hydraulic grips was set to approximately 1500 psi (10342 kPa). An extensiometer (MTS 632.12B-20) with 25.4 mm gage was positioned in the central portion of the specimen for accurate measure of the deformation. The load cell was calibrated, and the load was zeroed (after mounting of the grips, before testing). The tensile tests were run in displacement-control mode with a crosshead displacement rate of 0.05 in/min (0.127 cm/min) until failure of the specimen. Data acquisition frequency was set at 25 Hz. Elastic modulus was calculated as described in ASTM D3039 between the strain level 0.1 and 0.3%. At failure of the specimen, the crosshead displacement was stopped and the extensiometer and specimen were removed. Instrument software was used to determine the tensile modulus, stress at break, and strain at break. In addition, the force versus displacement curves were integrated to determine the Tensile Toughness.

### Epoxy clear cast and composite dynamic mechanical analysis

The storage modulus of the epoxy clear cast plaque and composites were determined using ASTM D5418 Plastics, Dynamic Mechanical Properties: in Flexure (Dual Cantilever Beam). The specimen was cut with dimensions of 0.5" x 2.4" x 2 mm (1.27 cm x 6.096 cm x 2 mm) thickness and analyzed using a TA Instruments Q800 DMA. A dual cantilever beam fixture with 35 mm distance between clamps was used with a sample atmosphere of nitrogen with 2 L/minute flow rate. The instrument was run in strain-controlled mode with a pre-load force of 0.05, strain of 0.01%, frequency of 1.0 Hz, and the temperature was ramped from 20°C to 203°C at 5°C/minute. TA Instruments Universal Analysis software was used to analyze the generated data and to report the storage modulus.

### Composite plastic deformation strength

The plastic deformation strength was determined using ISO 14130 Fiber-reinforced plastic composites - Determination of apparent interlaminar shear strength by short-beam method. Specimens were cut from molded plaques along the fiber direction. Five specimens were cut and tested at room temperature (23°C) using an electro-mechanical Instron Model 5967 test frame with a 5 kN load cell. A 5 kN capacity three-point bend fixture (Instron 3-point bend fixture, part# 2810-400) was used with a support diameter of 4 mm, a loading nose diameter of 10 mm, and a span set at 5x the specimen thickness (10 mm or 13.5 mm). The load cell was calibrated and the load zeroed after mounting of the fixture, before testing. The short beam shear (3-point bend) tests were run in displacement-control mode with a crosshead displacement rate of 1.0 mm/min until failure of the specimen. Data acquisition frequency was set to 20 Hz. At failure of the specimen (all failed by plastic deformation), the crosshead displacement was stopped, and the specimen was removed. Instrument software was used to determine the apparent interlaminar shear strength (ILSS), along with the average and standard deviation. The specimen was examined to determine the failure mode (single shear, multiple shear, compressive, tensile, or plastic shear) and in these cases, all specimens failed by plastic shear, so the apparent ILSS is labeled plastic deformation strength for clarity.

### Composite flexural testing

The composite flexural strength and chord modulus were determined by ASTM D7264, Flexural Properties of Polymer Matrix Composite Materials, Procedure A with a three-point loading system. Specimens were cut with dimensions of 102 mm x 13 mm x 4 mm thickness and a minimum of 5 specimens were tested at 23 °C using a Zwick/Roell Z010 Material Testing Machine equipped with a three-point bend fixture with span of 3 inches (7.62 cm) and support radius and nose of 6 mm. The load cell was calibrated and zeroed after mounting the fixture and before testing. The flexural tests were run at a crosshead speed of 0.031 inches/minute (0.787 mm/min) until failure of the specimen. The maximum flexural stress is calculated from the load-deflection curve by the instrument software.

### Mode I opening composite fracture toughness testing

Mode I opening interlaminar fracture toughness was measured according to ASTM D5528, Standard Test Method for Mode I Interlaminar Fracture Toughness of Unidirectional Fiber-Reinforced Polymer Matrix Composites. Specimens were cut from the 4 mm composite plaque containing the Teflon insert at the midplane with dimensions of 140 mm long x 20 mm wide where the Teflon insert extended 50 mm into the center from one edge. Loading blocks were bonded to the specimens at the spacer size with 3M^{®} Scotch-Weld^{™} DP460 and cured overnight.

An Instron 8511 test frame fitted with a 1000 N load cell was used to load the specimen at a constant rate of 1 mm/minute and data was collected at 2 Hz. A microscope mounted onto a horizontal rail was used to provide a measurement of the crack tip advancement on the side of the specimen. The force versus crack displacement curves were then analyzed using the Modified Beam Theory calculations mentioned in the ASTM standard to derive the values for the Mode I Fracture Toughness.

### EXAMPLES 1-2 AND COMPARATIVE EXAMPLES A-D

The epoxy compositions of Examples 1-2 and Comparative Examples A-D were prepared by blending the compositions A and B as discussed above in which the amounts listed in Table 3 are the amounts by weight in the final composition. The composition of Comparative Examples B and C was toughened only with the core-shell rubber (2.5 and 5.0%). The composition of Comparative Example D was toughened only with the phenoxy resin. The composition of Examples 1 and 2 were toughened with a combination of core-shell rubber and phenoxy resin. The amount of the components in the compositions together with their physical properties are set forth below in Table 3.

**TABLE 3**

| Example | Comp. Ex. A | Comp. Ex. B | Comp. Ex. C | Ex. 1 | Ex. 2 | Comp. Ex. D |
|---|---|---|---|---|---|---|
| A-side Composition | | | | | | |
| D.E.N. ^{®} 438 | 34.8 | 33.9 | 33.0 | 33.2 | 32.3 | 34.1 |
| D.E.R.^{®} 6508 | 33.1 | 32.2 | 31.4 | 31.6 | 30.8 | 32.4 |
| Licolub WE-4 | 2.2 | 2.1 | 2.1 | 2.1 | 2.0 | 2.1 |
| | | | | | | |

| B-side Composition | | | | | | |
|---|---|---|---|---|---|---|
| Dicyandiamide | 7.9 | 7.7 | 7.6 | 7.8 | 7.6 | 8.0 |
| TBDMU | 3.5 | 3.4 | 3.3 | 3.0 | 2.9 | 3.1 |
| Kane Ace MX 154 | 0 | 6.3 | 12.5 | 6.3 | 12.5 | 0 |
| Phenoxy resin | 0 | 0 | 0 | 2.0 | 2.0 | 2.0 |
| D.E.R.^{®} 331 | 18.6 | 14.4 | 10.2 | 6.0 | 1.8 | 10.3 |
| D.E.R.^{®} 330 | 0 | 0 | 0 | 8.0 | 8.1 | 8.0 |
| | | | | | | |

| Epoxy Properties | | | | | | |
|---|---|---|---|---|---|---|
| Formulation Viscosity (Pa·s @ 100 °C) | 35.1 | 16.9 | 35.2 | 24.7 | 35.4 | 27.5 |
| Peak Storage Modulus (MPa) | 3091 | 2959 | 2814 | 2874 | 2697 | 3036 |
| Tensile Stress (MPa) | 42.8 | 60.8 | 64.6 | 61.6 | 67.0 | 51.7 |
| Tensile Strain (%) | 1.3 | 2.3 | 3.0 | 2.5 | 3.5 | 1.8 |
| Young's Modulus (MPa) | 3506 | 3236 | 2974 | 3219 | 3021 | 3399 |
| Tensile Toughness (MPa) | 0.3 | 0.8 | 1.2 | 0.9 | 1.5 | 0.5 |
| | | | | | | |

| Composite Properties | | | | | | |
|---|---|---|---|---|---|---|
| Plastic Deformation Strength (MPa) | 70.7 | - | 76.7 | 78.2 | - | - |
| Longitudinal Tensile Modulus (GPa) | 124.6 | - | 114.7 | 131.0 | - | - |
| Peak Storage Modulus (GPa) | 51.7 | 46.7 | - | 38.7 | - | - |
| Flexural Strength (MPa) | 1340 | 1130 | - | 1070 | - | - |
| Chord Modulus (GPa) | 123 | 105 | - | 117 | - | - |
| Mode I Interlaminar Fracture Toughness at visual delamination (J/m²) | 309 | 358 | - | 495 | - | - |

The data in Table 3 show that a synergistic blend of core shell rubber and phenoxy resin can provide improved epoxy and composite performance with little increase in viscosity. The transfer of toughness from the epoxy matrix to the composite is complicated by many factors, including toughener type, toughener loading, and toughener size. The epoxy compositions of Comparative Example C and Example 1 were tested in composites to examine the toughness transfer. Although the epoxy composition of Comparative Example C had a higher toughness in the epoxy, the composition of Example 1 outperformed the epoxy composition of Comparative Example C for composites measured both by the plastic deformation strength and the longitudinal tensile modulus. In addition, although the epoxy composition of Comparative Example C showed an improvement in the plastic deformation strength, the tensile modulus dropped as compared to the un-toughened composite.

Further, the epoxy compositions of Comparative Example B and Example 1 had similar toughness in the epoxy, but the composite fracture toughness of the epoxy composition of Example 1 was dramatically enhanced over the epoxy composition of Comparative Example B and the un-toughened composite (Comparative Example A). Thus, the epoxy composition of Example 1 containing the synergistic blend of core shell rubber and phenoxy resin possessed enhanced performance in carbon fiber composites.

## Claims

1. A toughened epoxy composition comprising, based on the total weight of the toughened epoxy composition, of (a) 10 wt. % to 55 wt. % of a first epoxy component comprising one or more epoxy resins having at least one oxazolidone ring structure; and (b) 20 wt. % to 80 wt. % of a second epoxy component comprising one or more liquid epoxy resins; (c) 1.5 wt. % to 15 wt. % of one or more latent epoxy curing agents; (d) 1 wt. % to 25 wt. % of one or more rubber toughening agents and (e) 1 wt. % to 29 wt. % of one or more phenoxy resin toughening agents.

2. The toughened epoxy composition according to claim 1, wherein the one or more epoxy resins having at least one oxazolidone ring structure is a solid epoxy resin, or wherein the one or more epoxy resins having at least one oxazolidone ring structure is a reaction product of an aromatic epoxy resin and an isocyanate compound.

3. The toughened epoxy composition according to claim 1, wherein the one or more liquid epoxy resins comprise one or more of a diglycidyl ether of a polyhydric phenol compound, a diglycidyl ether of an aliphatic glycol, a polyglycidyl ether of a phenol-formaldehyde novolac resin, an alkyl substituted phenol-formaldehyde resin, a phenol-hydroxybenzaldehyde resin, a cresol-hydroxybenzaldehyde resin, a dicyclopentadiene-phenol resin, a dicyclopentadiene-substituted phenol resin, and a cycloaliphatic epoxy resin.

4. The toughened epoxy composition according to claim 1, wherein the one or more latent epoxy curing agents comprises a dicyanamide.

5. The toughened epoxy composition according to claim 1, wherein the one or more latent epoxy curing agents comprises one or more urea compounds having one or more urea groups and a molecular weight per urea group of up to 250; or
wherein the one or more latent epoxy curing agents comprises a dicyanamide and an aromatic urea.

6. The toughened epoxy composition according to claim 1, wherein the one or more rubber toughening agents comprises a core shell rubber selected from the group consisting of butadiene core, butadiene-styrene copolymer core, and combinations thereof.

7. The toughened epoxy composition according to claim 1, wherein the one or more phenoxy resin toughening agents are represented by the structure of formula I: 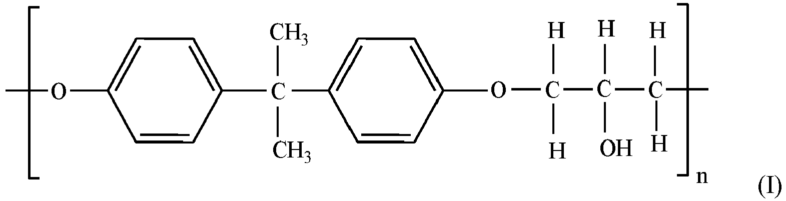 wherein n is from 30 to 100.

8. The toughened epoxy composition according to claim 1, comprising:
(i) 10 wt. % to 55 wt. %, based on the total weight of the toughened epoxy composition, of the first epoxy component,
(ii) 20 wt. % to 80 wt. %, based on the total weight of the toughened epoxy composition, of the second epoxy component,
(iii) 1.5 wt. % to 15 wt. %, based on the total weight of the toughened epoxy composition, of the one or more latent epoxy curing agents,
(iv) 1 wt. % to 15 wt. %, based on the total weight of the toughened epoxy composition, of the one or more rubber toughening agents, and
(v) 1 wt. % to 10 wt. %, based on the total weight of the toughened epoxy composition, of the one or more phenoxy resin toughening agents.

9. The toughened epoxy composition according to claim 1, having a viscosity of from 10 to 100 Pa•s at 100 C, as measured in the specification.

10. A prepreg comprising one or more reinforcing fibers impregnated with a toughened epoxy composition, wherein the toughened epoxy composition comprises, based on the total weight of the toughened epoxy composition, of (a) 10 wt. % to 55 wt. % of a first epoxy component comprising one or more epoxy resins having at least one oxazolidone ring structure; and (b) 20 wt. % to 80 wt. % of a second epoxy comprising one or more liquid epoxy resins; (c) 1.5 wt. % to 15 wt. % of one or more latent epoxy curing agents; (d) 1 wt. % to 25 wt. % of one or more rubber toughening agents and (e) 1 wt. % to 29 wt. % of one or more phenoxy resin toughening agents.

11. The prepreg according to claim 10, wherein the one or more reinforcing fibers are carbon fibers.

12. A fiber-reinforced composite comprising a cured prepreg according to claim 11.

13. A fiber-reinforced composite comprising a cured toughened epoxy composition according to claim 1 and one or more reinforcing fibers.

14. A process for making a fiber-reinforced composite comprising:
(a) impregnating one or more reinforcing fibers with one or more toughened epoxy compositions comprising, based on the total weight of the toughened epoxy composition, of (i) 10 wt. % to 55 wt. % of a first epoxy component comprising one or more epoxy resins having at least one oxazolidone ring structure; and (ii) 20 wt. % to 80 wt. % of a second epoxy component comprising one or more liquid epoxy resins; (iii) 1.5 wt. % to 15 wt. % of one or more latent epoxy curing agents; (iv) 1 wt. % to 25 wt. % of one or more rubber toughening agents and (v) 1 wt. % to 29 wt. % of one or more phenoxy resin toughening agents; and
(b) curing the impregnated one or more reinforcing fibers.

15. The method according to claim 14, wherein the one or more reinforcing fibers are carbon fibers.

## Patentansprüche

1. Zäh gemachte Epoxidzusammensetzung, umfassend, basierend auf dem Gesamtgewicht der zäh gemachten Epoxidzusammensetzung, (a) zu 10 Gew.-% bis 55 Gew.-% eine erste Epoxidkomponente, umfassend ein oder mehrere Epoxidharze, die mindestens eine Oxazolidonringstruktur aufweisen; und (b) zu 20 Gew. % bis 80 Gew. % eine zweite Epoxidkomponente, umfassend ein oder mehrere flüssige Epoxidharze; (c) zu 1,5 Gew. % bis 15 Gew. % ein oder mehrere latente Epoxidaushärtungsmittel; (d) zu 1 Gew. % bis 25 Gew. % ein oder mehrere Gummizähigkeitsmittel und (e) zu 1 Gew. % bis 29 Gew. % ein oder mehrere Phenoxyharz-Zähigkeitsm ittel.

2. Zäh gemachte Epoxidzusammensetzung nach Anspruch 1, wobei das eine oder die mehreren Epoxidharze mindestens eine Oxazolidonringstruktur aufweisen, die ein festes Epoxidharz ist, oder wobei das eine oder die mehreren Epoxidharze mindestens eine Oxazolidonringstruktur aufweisen, die ein Reaktionsprodukt eines aromatischen Epoxidharzes und einer Isocyanatverbindung ist.

3. Zäh gemachte Epoxidzusammensetzung nach Anspruch 1, wobei das eine oder die mehreren flüssigen Epoxidharze einen oder mehrere eines Diglycidylethers einer mehrwertigen Phenolverbindung, ein Diglycidylether eines aliphatischen Glykols, ein Polyglycidylether eines Phenol-Formaldehyd-Novolakharzes, ein alkylsubstituiertes Phenol-Formaldehyd-Harz, ein Phenol-Hydroxybenzaldehyd-Harz, ein Kresol-Hydroxybenzaldehyd-Harz, ein Dicyclopentadien-Phenol-Harz, ein dicyclopentadiensubstituiertes Phenolharz und ein cycloaliphatisches Epoxidharz umfassen.

4. Zäh gemachte Epoxidzusammensetzung nach Anspruch 1, wobei das eine oder die mehreren latenten Epoxidaushärtungsmittel ein Dicyanamid umfassen.

5. Zäh gemachte Epoxidzusammensetzung nach Anspruch 1, wobei das eine oder die mehreren latenten Epoxidaushärtungsmittel eine oder mehrere Harnstoffverbindungen umfassen, die eine oder mehrere Harnstoffgruppen und ein Molekulargewicht pro Harnstoffgruppe von bis zu 250 aufweisen; oder
wobei das eine oder die mehreren latenten Epoxidaushärtungsmittel ein Dicyanamid und einen aromatischen Harnstoff umfassen.

6. Zäh gemachte Epoxidzusammensetzung nach Anspruch 1, wobei das eine oder die mehreren Gummizähigkeitsmittel einen Kern-Schale-Gummi umfassen, der aus der Gruppe ausgewählt ist, bestehend aus Butadienkern, Butadien-Styrol-Copolymerkern und Kombinationen davon.

7. Zäh gemachte Epoxidzusammensetzung nach Anspruch 1, wobei das eine oder die mehreren Phenoxyharz-Zähigkeitsmittel durch die Struktur von Formel I dargestellt werden: 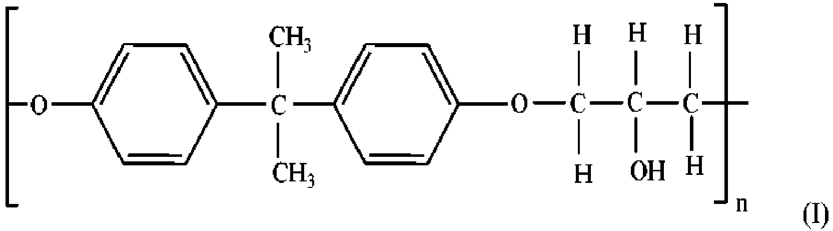 wobei n von 30 bis 100 beträgt.

8. Zäh gemachte Epoxidzusammensetzung nach Anspruch 1, umfassend:
(i) zu 10 Gew.-% bis 55 Gew.-%, basierend auf dem Gesamtgewicht der zäh gemachten Epoxidzusammensetzung, die erste Epoxidkomponente,
(ii) zu 20 Gew.-% bis 80 Gew.-%, basierend auf dem Gesamtgewicht der zäh gemachten Epoxidzusammensetzung, die zweite Epoxidkomponente,
(iii) zu 1,5 Gew.-% bis 15 Gew.-%, basierend auf dem Gesamtgewicht der zäh gemachten Epoxidzusammensetzung, das eine oder die mehreren latenten Epoxidaushärtungsmittel,
(iv) zu 1 Gew.-% bis 15 Gew.-%, basierend auf dem Gesamtgewicht der zäh gemachten Epoxidzusammensetzung, das eine oder die mehreren Gummizähigkeitsmittel und
(v) zu 1 Gew.-% bis 10 Gew.-%, basierend auf dem Gesamtgewicht der zäh gemachten Epoxidzusammensetzung, das eine oder die mehreren Phenoxyharz-Zähigkeitsmittel.

9. Zäh gemachte Epoxidzusammensetzung nach Anspruch 1, die eine Viskosität von 10 bis 100 Pa•s bei 100 °C aufweist, wie in der Patentschrift gemessen.

10. Prepreg, umfassend eine oder mehrere Verstärkungsfasern, die mit einer zäh gemachten Epoxidzusammensetzung imprägniert sind, wobei die zäh gemachte Epoxidzusammensetzung, basierend auf dem Gesamtgewicht der zäh gemachten Epoxidzusammensetzung, (a) zu 10 Gew.-% bis 55 Gew.-% eine erste Epoxidkomponente, umfassend ein oder mehrere Epoxidharze, die mindestens eine Oxazolidon-Ringstruktur aufweisen; und (b) zu 20 Gew. % bis 80 Gew. % ein zweites Epoxid, umfassend ein oder mehrere flüssige Epoxidharze; (c) zu 1,5 Gew. % bis 15 Gew. % ein oder mehrere latente Epoxidaushärtungsmittel; (d) zu 1 Gew. % bis 25 Gew. % ein oder mehrere Gummizähigkeitsmittel und (e) zu 1 Gew. % bis 29 Gew. % ein oder mehrere Phenoxyharz-Zähigkeitsmittel umfasst.

11. Prepreg nach Anspruch 10, wobei die eine oder die mehreren Verstärkungsfasern Kohlenstofffasern sind.

12. Faserverstärkter Verbundwerkstoff, umfassend ein ausgehärtetes Prepreg nach Anspruch 11.

13. Faserverstärkter Verbundwerkstoff, umfassend eine ausgehärtete, zäh gemachte Epoxidzusammensetzung nach Anspruch 1 und eine oder mehrere Verstärkungsfasern.

14. Verfahren zum Herstellen eines faserverstärkten Verbundwerkstoffs, umfassend:
(a) Imprägnieren einer oder mehrerer Verstärkungsfasern mit einer oder mehreren zäh gemachten Epoxidzusammensetzungen, umfassend, basierend auf dem Gesamtgewicht der zäh gemachten Epoxidzusammensetzung, (i) zu 10 Gew.-% bis 55 Gew.-% eine erste Epoxidkomponente, umfassend ein oder mehrere Epoxidharze, die mindestens eine Oxazolidon-Ringstruktur aufweisen; und (ii) zu 20 Gew. % bis 80 Gew. % eine zweite Epoxidkomponente, umfassend ein oder mehrere flüssige Epoxidharze; (iii) zu 1,5 Gew. % bis 15 Gew. % ein oder mehrere latente Epoxidaushärtungsmittel; (iv) zu 1 Gew. % bis 25 Gew. % ein oder mehrere Gummizähigkeitsmittel und (v) zu 1 Gew. % bis 29 Gew. % ein oder mehrere Phenoxyharz-Zähigkeitsmittel; und
(b) Aushärten der imprägnierten einen oder mehreren Verstärkungsfasern.

15. Verfahren nach Anspruch 14, wobei die eine oder die mehreren Verstärkungsfasern Kohlenstofffasern sind.

## Revendications

1. Composition époxy durcie comprenant, sur la base du poids total de la composition époxy durcie, de (a) 10 % en poids à 55 % en poids d'un premier composant époxy comprenant une ou plusieurs résines époxy ayant au moins une structure cyclique oxazolidone ; et (b) 20 % en poids à 80 % en poids d'un second composant époxy comprenant une ou plusieurs résines époxy liquides ; (c) 1,5 % en poids à 15 % en poids d'un ou plusieurs agents de traitement époxy latents ; (d) 1 % en poids à 25 % en poids d'un ou de plusieurs agents de durcissement du caoutchouc et (e) 1 % en poids à 29 % en poids d'un ou de plusieurs agents de durcissement de la résine phénoxy.

2. Composition époxy durcie selon la revendication 1, dans laquelle la ou les résines époxy ayant au moins une structure cyclique oxazolidone est une résine époxy solide, ou dans laquelle la ou les résines époxy ayant au moins une structure cyclique oxazolidone est un produit de réaction d'une résine époxy aromatique et d'un composé d'isocyanate.

3. Composition époxy durcie selon la revendication 1, dans laquelle la ou les résines époxy liquides comprennent un ou plusieurs parmi un éther diglycidylique d'un composé phénolique polyhydrique, un éther diglycidylique d'un glycol aliphatique, un éther polyglycidylique d'une résine novolac phénol-formaldéhyde, une résine phénol-formaldéhyde substituée par un alkyle, une résine phénolhydroxybenzaldéhyde, une résine crésol-hydroxybenzaldéhyde, une résine dicyclopentadiène-phénol, une résine phénol substituée par un dicyclopentadiène et une résine époxy cycloaliphatique.

4. Composition époxy durcie selon la revendication 1, dans laquelle le ou les agents de traitement époxy latents comprennent un dicyanamide.

5. Composition époxy durcie selon la revendication 1, dans laquelle le ou les agents de traitement époxy latents comprennent un ou plusieurs composés d'urée ayant un ou plusieurs groupes d'urée et un poids moléculaire par groupe d'urée allant jusqu'à 250 ; ou
dans laquelle le ou les agents de traitement époxy latent comprennent un dicyanamide et une urée aromatique.

6. Composition époxy durcie selon la revendication 1, dans laquelle l'agent ou les agents de durcissement du caoutchouc comprennent un noyau de caoutchouc sélectionné dans le groupe constitué par le noyau de butadiène, le noyau de copolymère de butadiène-styrène, et des combinaisons de ceux-ci.

7. Composition époxy durcie selon la revendication 1, dans laquelle l'agent ou les agents de durcissement de résine phénoxy sont représentés par la structure de la formule I : 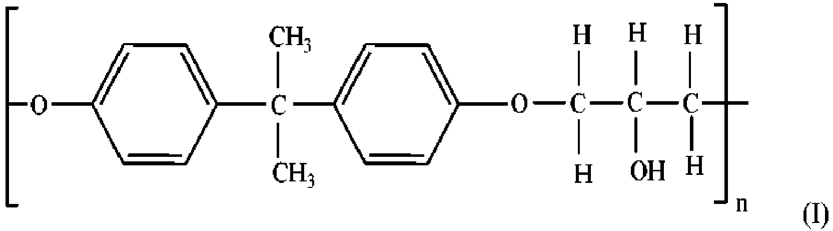 dans laquelle n va de 30 à 100.

8. Composition époxy durcie selon la revendication 1, comprenant :
(i) 10 % en poids à 55 % en poids, sur la base du poids total de la composition époxy durcie, du premier composant époxy
(ii) 20 % en poids à 80 % en poids, sur la base du poids total de la composition époxy durcie, du second composant époxy
(iii) 1,5 % en poids à 15 % en poids, sur la base du poids total de la composition époxy durcie, de l'agent ou des agents de traitement époxy latents,
(iv) 1 % en poids à 15 % en poids, sur la base du poids total de la composition époxy durcie, de l'agent ou des agents de durcissement du caoutchouc, et
(v) 1 % en poids à 10 % en poids, sur la base du poids total de la composition époxy durcie, de l'agent ou des agents de durcissement de la résine phénoxy.

9. Composition époxy durcie selon la revendication 1, ayant une viscosité de 10 à 100 Pa•s à 100 °C, telle que mesurée dans la spécification.

10. Préimprégné comprenant une ou plusieurs fibres de renforcement imprégnées d'une composition époxy durcie, dans lequel la composition époxy durcie comprend, sur la base du poids total de la composition époxy durcie, de (a) 10 % en poids à 55 % en poids d'un premier composant époxy comprenant une ou plusieurs résines époxy ayant au moins une structure cyclique oxazolidone ; et (b) 20 % en poids à 80 % en poids d'un second époxy comprenant une ou plusieurs résines époxy liquides ; (c) 1,5 % en poids à 15 % en poids d'un ou plusieurs agents de traitement époxy latents ; (d) 1 % en poids à 25 % en poids d'un ou de plusieurs agents de durcissement du caoutchouc et (e) 1 % en poids à 29 % en poids d'un ou de plusieurs agents de durcissement de la résine phénoxy.

11. Préimprégné selon la revendication 10, dans lequel la ou les fibres de renforcement sont des fibres de carbone.

12. Composite renforcé par des fibres comprenant un pré-imprégné traité selon la revendication 11.

13. Composite renforcé par des fibres comprenant une composition époxy durcie selon la revendication 1 et une ou plusieurs fibres de renforcement.

14. Procédé de fabrication d'un composite renforcé par des fibres comprenant :
(a) l'imprégnation d'une ou plusieurs fibres de renforcement avec une ou plusieurs compositions époxy durcies comprenant, sur la base du poids total de la composition époxy durcie, de (i) 10 % en poids à 55 % en poids d'un premier composant époxy comprenant une ou plusieurs résines époxy ayant au moins une structure cyclique oxazolidone ; et (ii) 20 % en poids à 80 % en poids d'un second composant époxy comprenant une ou plusieurs résines époxy liquides ; (iii) 1,5 % en poids à 15 % en poids d'un ou plusieurs agents de traitement époxy latents ; (iv) 1 % en poids à 25 % en poids d'un ou de plusieurs agents de durcissement du caoutchouc et (v) 1 % en poids à 29 % en poids d'un ou de plusieurs agents de durcissement de la résine phénoxy ; et
(b) le traitement d'une ou plusieurs fibres de renforcement imprégnées.

15. Procédé selon la revendication 14, dans lequel la ou les fibres de renforcement sont des fibres de carbone.
